# FASCICULE DE BREVET EUROPEEN

(11) **EP 3 004 749 B1**
(45) Date de publication et mention de la délivrance du brevet: **01.07.2020**
(21) Numéro de dépôt: 14731711.9
(22) Date de dépôt: 22.05.2014
(51) Int. Cl.: F16L 59/14, F16L 9/10, F16L 9/00, F24F 13/02, H02G 3/04, E04F 17/02

(54) **CONDUIT DE PROTECTION INCENDIE**
BRANDSCHUTZKANAL
FIRE-PROOF CONDUIT

(30) Priorité: 29.05.2013 FR 1301217
(43) Date de publication de la demande: 13.04.2016
(73) Titulaire: ATHERMA, 95340 Persan (FR)
(72) Inventeur: LOURDEL, Dominique, F-76630 Auquemesnil (FR)
(74) Mandataire: Demulsant, Xavier
(86) Numéro de dépôt international: PCT/FR2014/051209
(87) Numéro de publication internationale: WO 2014/191664

(56) Documents cités:
- DE-A1- 2 912 674
- DE-A1-102004 060 748
- DE-U- 7 336 992
- DE-U1- 20 023 671
- DE-U1- 20 110 776
- DE-U1-202011 052 284

## Description

La présente invention concerne les conduits de protection incendie, c'est-à-dire notamment les conduits de désenfumage ou de ventilation ainsi que les conduits pour encastrement.

On sait que les conduits de désenfumage sont des conduits qui sont destinés à évacuer les fumées produites au cours d'un incendie. Ils permettent notamment de faciliter l'évacuation des occupants des locaux sinistrés, de limiter la propagation de l'incendie et de favoriser l'intervention des pompiers.

Les conduits de ventilation quant à eux sont destinés à amener dans le local sinistré, lors d'un incendie, l'air frais nécessaire à l'extraction des fumées par le conduit de désenfumage.

Quant aux conduits pour encastrement ils sont utilisés pour assurer l'isolation de conduites diverses ou de gaines électriques.

On comprend que de tels conduits doivent satisfaire à des conditions de résistance au feu qui sont définies de façon précise dans des normes rigoureuses spécifiques.

Ces conduits appartiennent essentiellement à deux catégories, à savoir les conduits métalliques constitués de pièces pliées galvanisées et les conduits en matériaux réfractaires.

Les conduits métalliques sont légers mais, dans la mesure où ils nécessitent de recevoir sur leur face externe un revêtement et un traitement complémentaire, ils sont d'un coût de production élevé.

Les conduits en matériaux réfractaires sont habituellement constitués à partir de dalles ou panneaux qui sont taillés aux dimensions souhaitées et qui dépendent notamment des caractéristiques du bâtiment dans lesquels ces conduits sont installés. Les éléments taillés sont ensuite assemblés et collés entre eux au moyen d'une colle réfractaire pour constituer le conduit de protection incendie souhaité.

On connaît divers types de conduits de désenfumage qui sont constitués à partir de dalles faites en matériau de plâtre, dit de haute densité, dont la masse volumique est de l'ordre de 1000 kg/m³ et dont l'épaisseur de la paroi, pour satisfaire aux normes en vigueur relatives à des conduits appartenant à la catégorie de résistance au feu de deux heures, est de l'ordre de 50 mm. Le poids du matériau de base de ces conduits est ainsi très élevé, de l'ordre de 50 kg/m², ce qui constitue un inconvénient important de cette technique, tant en ce qui concerne le coût du transport que celui de la mise en œuvre.

Afin de diminuer le poids de ces conduits, on a proposé de faire appel à un matériau de base plus léger, à savoir un matériau minéral naturel constitué de vermiculite exfoliée, qui est un bon isolant thermique incombustible. Ainsi, le poids du matériau de base est de l'ordre de 500 kg/m³. Par ailleurs, on a constaté que pour appartenir à la catégorie satisfaisant aux conditions de résistance au feu de deux heures, l'épaisseur des dalles constituant les conduits de désenfumage devait être de l'ordre de 50 mm, ce qui leur confère un poids de 27,5 kg/m².

On a également proposé de faire appel à des panneaux constitués de gypse à haute performance qui est renforcé de fibres de verre. On a ainsi obtenu un matériau de base dont la masse volumique est également de l'ordre de 500 kg/m³ avec une épaisseur de l'ordre de 50 mm, soit un poids au mètre carré du même ordre que le précédent, pour la même catégorie de résistance au feu.

Le document DE7336992 décrit un conduit d'air à section transversale rectangulaire résistant à la chaleur, et divulgue les caractéristiques du préambule de la revendication 1.

On constate ainsi que la technique de constitution des conduits de protection incendie en matériau réfractaire est tributaire d'un poids élevé, ce qui grève de façon importante les coûts de transport des dalles constituant les conduits mais également la mise en œuvre de ces derniers.

La présente invention a ainsi pour but de proposer un conduit de protection incendie dont le poids, une fois celui-ci terminé, soit inférieur d'environ 50% à ceux de l'état antérieur de la technique les plus légers, et ceci pour une même catégorie de résistance au feu.

La présente invention a ainsi pour objet un conduit de protection incendie d'au moins un local comprenant un conduit formé d'éléments de dalle réfractaires assemblés entre eux. Ce conduit de désenfumage est caractérisé en ce que les éléments de dalle sont constitués d'un matériau silicocalcaire et la face interne du conduit est recouverte d'un revêtement constitué d'une colle réfractaire.

Un tel conduit de protection incendie peut être utilisé pour constituer un conduit de désenfumage ou de ventilation ainsi qu'un conduit pour encastrement.

Préférentiellement le matériau silicocalcaire sera constitué de silicate de calcium et sa masse volumique sera préférentiellement égale à 260 kg/m³.

Suivant l'invention, la colle réfractaire préférentiellement comprendra du silicate de sodium dans une proportion comprise entre 60 et 90% en poids et sera préférentiellement égale à 75%.

Par ailleurs cette colle préférentiellement comprendra des additifs, notamment du kaolin dans une proportion comprise entre 10 et 20% en poids et préférentiellement égale à 15%.

Elle pourra également contenir de l'argile, dans une proportion comprise entre 5 et 15% en poids et préférentiellement égale à 10%.

Suivant l'invention, l'épaisseur des dalles réfractaires préférentiellement sera comprise entre 30 et 50 mm et sera préférentiellement égale à 40 mm et l'épaisseur du revêtement de colle réfractaire sera au moins égale à 0,1 mm.

Dans un mode de mise en œuvre de l'invention, les éléments de dalle réfractaires seront assemblés au moyen de la même colle que celle utilisée en tant que revêtement.

Le conduit de protection incendie suivant l'invention aura préférentiellement une section droite de forme rectangulaire et sera formé de quatre éléments de dalle, deux éléments de dalle opposés venant en appui sur les chants respectifs des deux autres éléments de dalle.

Préférentiellement, les deux éléments de dalle opposés qui sont en appui sur les chants des deux autres éléments de dalle seront disposés verticalement.

La présente invention a également pour objet une dalle réfractaire destinée à la mise en œuvre d'un conduit de protection incendie tel que défini précédemment.

On décrira ci-après, à titre d'exemple non limitatif, des formes d'exécution de la présente invention, en référence au dessin annexé sur lequel :
- la figure 1 est une vue en coupe transversale d'un conduit de protection incendie suivant l'invention formant un conduit de désenfumage ou de ventilation,
- la figure 2 est une vue en perspective d'un autre mode de mise en œuvre d'un conduit de protection incendie suivant l'invention.

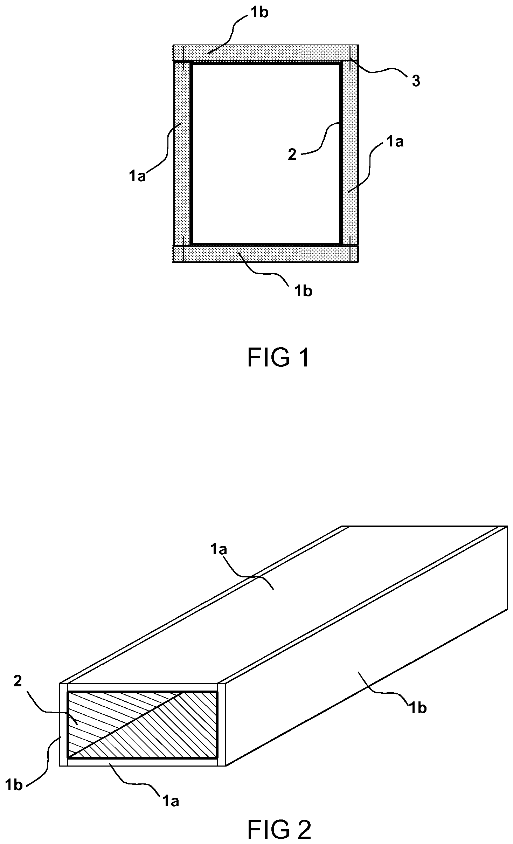

On a représenté sur la figure 1 un conduit de désenfumage conforme à l'invention, qui est réalisé à partir d'éléments la, 1b qui sont découpés dans des dalles réalisées dans un matériau réfractaire constitué en l'espèce de silicate de calcium dont la masse volumique est de 260 kg/m³ et dont l'épaisseur est au moins égale à 30 mm, et préférentiellement égale à 40 mm. Pour une telle épaisseur le poids des dalles de base est de l'ordre de 10,4 kg/m².

Les éléments de dalle la, 1b sont assemblés au moyen de vis en acier 3, notamment des vis dites « à bois », de façon à former un conduit de section droite rectangulaire. La fixation est complétée en interposant, dans les zones en contact, une couche de colle spécifique. Cette colle spécifique est de type dit réfractaire, c'est-à-dire qu'elle est du type homologué pour ce genre d'application et est en mesure de résister à des températures de l'ordre de 1100°C.

Cette colle réfractaire est essentiellement constituée de silicate de sodium dont elle comprend de 60 à 90% en poids. Préférentiellement elle comprendra 75% de silicate de sodium auquel seront adjoints un ou plusieurs adjuvants. L'adjuvant le plus intéressant est constitué de kaolin dont la colle pourra comporter de 10 à 20% en poids et préférentiellement 15%.

En tant que second adjuvant, la colle réfractaire pourra comporter entre 5 et 15% en poids d'argile et préférentiellement 10%.

Une fois le conduit de désenfumage assemblé, on étend sur la totalité de la surface interne de celui-ci, notamment au moyen d'un rouleau enduiseur, une ou plusieurs couches 2 de colle réfractaire, d'une épaisseur d'au moins 0,1 mm. Cette colle peut avantageusement être constituée de la colle qui a été utilisée lors de la phase d'assemblage pour assurer la fixation des éléments de dalle la et 1b.

Ainsi que représenté sur la figure 1, les dalles sont assemblées de façon que deux dalles opposées 1b prennent respectivement appui sur le chant des deux autres dalles opposées.

Préférentiellement on a constaté que la répartition des contraintes est meilleure lorsque, ainsi que représenté sur la figure 2, les deux dalles opposées qui prennent appui sur les chants des deux autres dalles sont disposées verticalement.

Le conduit de protection incendie suivant l'invention est particulièrement intéressant en raison de sa légèreté par rapport aux conduits de la technique antérieure, cette légèreté étant obtenue d'une part en raison du faible poids de son matériau de base et d'autre part en raison de l'épaisseur réduite de ses parois, ces dispositions étant rendues possibles par l'utilisation de la colle réfractaire utilisée en tant qu'enduit à l'intérieur de son conduit.

En effet, les tests effectués par la demanderesse ont montré que le conduit de protection incendie suivant l'invention, en raison de sa nature, était d'un poids très inférieur, et ceci pour une catégorie de résistance au feu déterminée, à ceux utilisés dans la technique concernée.

L'objet de la présente invention peut notamment être utilisé non seulement pour constituer des conduits de désenfumage ainsi qu'exposé précédemment, mais également pour constituer des conduits de ventilation ou des conduits pour encastrement destinés à contenir des canalisations ou des gaines électriques.

## Revendications

1. Conduit de protection incendie d'au moins un local comprenant un conduit formé d'éléments de dalle réfractaires (1a, 1b) assemblés entre eux, **caractérisé en ce que** les éléments de dalle réfractaires (1a, 1b) sont constitués d'un matériau silicocalcaire et la face interne du conduit est recouverte sur la totalité de sa surface d'un revêtement constitué d'une colle réfractaire.

2. Conduit de protection incendie suivant la revendication 1, **caractérisé en ce qu'**il forme un conduit de désenfumage ou de ventilation.

3. Conduit de protection incendie suivant l'une des revendications 1 ou 2, **caractérisé en ce que** les éléments de dalle réfractaires (1a, 1b) sont constitués de silicate de calcium.

4. Conduit de protection incendie suivant la revendication 3, **caractérisé en ce que** la masse volumique du silicate de calcium est de l'ordre de 260 kg/m³.

5. Conduit de protection incendie suivant l'une des revendications précédentes, **caractérisé en ce que** ladite colle réfractaire comprend du silicate de sodium.

6. Conduit de protection incendie suivant la revendication 5, **caractérisé en ce que** ladite colle réfractaire comprend entre 60 et 90% en poids de silicate de sodium et préférentiellement 75%.

7. Conduit de protection incendie suivant l'une des revendications précédentes, **caractérisé en ce que** ladite colle réfractaire comprend entre 10 et 20% en poids de kaolin et préférentiellement 15%.

8. Conduit de protection incendie suivant l'une des revendications précédentes, **caractérisé en ce que** la dite colle réfractaire comprend entre 5 et 15% en poids d'argile et préférentiellement 10%.

9. Conduit de protection incendie suivant l'une des revendications précédentes, **caractérisé en ce que** l'épaisseur du revêtement de colle réfractaire est au moins égale à 0,1 mm.

10. Conduit de protection incendie suivant l'une des revendications précédentes, **caractérisé en ce que** les éléments de dalle réfractaires (1a, 1b) ont une épaisseur comprise entre 30 et 50 mm et préférentiellement égale à 40 mm.

11. Conduit de protection incendie suivant l'une des revendications précédentes, **caractérisé en ce que** les éléments de dalle réfractaires (1a, 1b) sont assemblés au moyen de la même colle que celle utilisée en tant que revêtement.

12. Conduit de protection incendie suivant l'une des revendications précédentes, **caractérisé en ce qu'**il est de section droite rectangulaire et constitué de quatre éléments de dalle réfractaires (1a, 1b), deux éléments de dalle opposés (1b) venant en appui sur les chants respectifs des deux autres éléments de dalle (la).

13. Conduit de protection incendie suivant la revendication 12, **caractérisé en ce que** les deux éléments de dalle opposés (1b) qui sont en appui sur les chants des deux autres éléments de dalle (la) sont disposés verticalement lorsque le conduit de protection incendie est disposé horizontalement.

## Patentansprüche

1. Brandschutzschacht wenigstens eines Raums, umfassend einen Schacht, der aus feuerfesten Plattenelementen (1a, 1b) geformt ist, die miteinander zusammengebauten sind, **dadurch gekennzeichnet, dass** die feuerfesten Plattenelemente (1a, 1b) aus einem Kalksandsteinmaterial gebildet sind und die Innenseite des Schachts auf seiner gesamten Oberfläche einer Beschichtung, die aus einem feuerfesten Klebstoff gebildet ist, abgedeckt ist.

2. Brandschutzschacht gemäß Anspruch 1, **dadurch gekennzeichnet, dass** er einen Rauchabzugs- oder Belüftungsschacht formt.

3. Brandschutzschacht gemäß einem der Ansprüche 1 oder 2, **dadurch gekennzeichnet, dass** die Brandschutzelemente (1a, 1b) aus Kalziumsilikat gebildet sind.

4. Brandschutzschacht gemäß Anspruch 3, **dadurch gekennzeichnet, dass** die Volumenmasse des Kalziumsilikats in der Größenordnung von 260 kg/m³ liegt.

5. Brandschutzschacht gemäß einem der voranstehenden Ansprüche, **dadurch gekennzeichnet, dass** der genannte feuerfeste Klebstoff Natriumsilikat umfasst.

6. Brandschutzschacht gemäß Anspruch 5, **dadurch gekennzeichnet, dass** der genannte feuerfeste Klebstoff zwischen 60 und 90 Gew.-% und bevorzugt 75 Gew-% Natriumsilikat umfasst.

7. Brandschutzschacht gemäß einem der voranstehenden Ansprüche, **dadurch gekennzeichnet, dass** der genannte feuerfeste Klebstoff zwischen 10 und 20 Gew.-% und bevorzugt 15 Gew.-% Kaolin umfasst.

8. Brandschutzschacht gemäß einem der voranstehenden Ansprüche, **dadurch gekennzeichnet, dass** der genannte feuerfeste Klebstoff zwischen 5 und 15 Gew.-% und bevorzugt 10 Gew.-% Tonerde umfasst.

9. Brandschutzschacht gemäß einem der voranstehenden Ansprüche, **dadurch gekennzeichnet, dass** die Dicke der feuerfesten Klebstoff-Beschichtung mindestens gleich 0,1 mm beträgt.

10. Brandschutzschacht gemäß einem der voranstehenden Ansprüche, **dadurch gekennzeichnet, dass** die feuerfesten Plattenelemente (1a, 1b) eine zwischen 30 und 50 mm inbegriffene Dicke, die bevorzugt gleich 40 mm ist, aufweisen.

11. Brandschutzschacht gemäß einem der voranstehenden Ansprüche, **dadurch gekennzeichnet, dass** die feuerfesten Plattenelemente (1a, 1b) wenigstens mit demselben Klebstoff zusammengebaut sind wie dem, der als Beschichtung verwendet ist.

12. Brandschutzschacht gemäß einem der voranstehenden Ansprüche, **dadurch gekennzeichnet, dass** er einen rechteckigen geraden Querschnitt aufweist und aus vier feuerfesten Plattenelementen (1a, 1b) gebildet ist, wobei zwei entgegengesetzte Plattenelemente (1b) auf den jeweiligen Kanten der zwei anderen Plattenelemente (1a) zum Aufstützen kommen.

13. Brandschutzschacht gemäß Anspruch 12, **dadurch gekennzeichnet, dass** die zwei entgegengesetzten Plattenelemente (1b), die auf den Kanten der zwei anderen Plattenelemente (1a) zum Aufstützen kommen, vertikal angeordnet sind, wenn der Brandschutzschacht horizontal angeordnet ist.

## Claims

1. A fire protection duct for at least one room comprising a duct formed by refractory block elements (Ia, Ib) assembled to each other, **characterized in that** the refractory block elements (Ia, Ib) consist of a silicocalcareous material and the inner face of the duct is covered over its entire surface with a coating consisting of a refractory glue.

2. The fire protection duct according to claim 1, **characterized in that** it forms a smoke removal or ventilation duct.

3. The fire protection duct according to one of claims 1 or 2, **characterized in that** the refractory block elements (Ia, Ib) consist of calcium silicate.

4. The fire protection duct according to claim 3, **characterized in that** the density of the calcium silicate is in the order of 260kg/m³.

5. The fire protection duct according to one of the previous claims, **characterized in that** said refractory glue comprises sodium silicate.

6. The fire protection duct according to claim 5, **characterized in that** said refractory glue comprises between 60 and 90% and preferentially 75% by weight of sodium silicate.

7. The fire protection duct according to one of the previous claims, **characterized in that** said refractory glue comprises between 10 and 20% and preferentially 15% by weight of kaolin.

8. The fire protection duct according to one of the previous claims, **characterized in that** said refractory glue comprises between 5 and 15% and preferentially 10% by weight of clay.

9. The fire protection duct according to one of the previous claims, **characterized in that** the thickness of the refractory glue coating is at least equal to 0.1mm.

10. The fire protection duct according to one of the previous claims, **characterized in that** the refractory block elements (Ia, Ib) have a thickness between 30 and 50mm and preferentially equal to 40mm.

11. The fire protection duct according to one of the previous claims, **characterized in that** the refractory block elements (Ia, Ib) are assembled by means of the same glue as that used as a coating.

12. The fire protection duct according to one of the previous claims, **characterized in that** it has a rectangular cross-section and consists of four refractory block elements (Ia, Ib), two opposite block elements (Ib) bearing against the respective edges of both other block elements (Ia).

13. The fire protection duct according to claim 12, **characterized in that** both opposite block elements (Ib) which bear against the edges of both other block elements (Ia) are disposed vertically when the fire protection duct is disposed horizontally.
